# EUROPÄISCHE PATENTSCHRIFT

(11) **EP 2 738 289 B1**
(45) Veröffentlichungstag und Bekanntmachung des Hinweises auf die Patenterteilung: **18.11.2020**
(21) Anmeldenummer: 13194670.9
(22) Anmeldetag: 27.11.2013
(51) Int. Cl.: C23C 18/04, C23C 18/12, C04B 35/622, D01D 5/06, C23C 18/14, C04B 35/624, D01D 10/00, B05D 3/14

(54) **VERFAHREN ZUR PLASMABEHANDLUNG EINER KOLLOIDALEN LÖSUNG**
METHOD FOR PLASMA TREATMENT OF A COLLOIDAL SOLUTION
PROCÉDÉ DE TRAITEMENT AU PLASMA D'UNE SOLUTION COLLOÏDALE

(30) Priorität: 03.12.2012 DE 102012111710
(43) Veröffentlichungstag der Anmeldung: 04.06.2014
(73) Patentinhaber: alethia-group GmbH, 17489 Greifswald (DE)
(72) Erfinder: Hupel, Daniel, 17489 Greifswald (DE)
(74) Vertreter: Kirchner, Christian

(56) Entgegenhaltungen:
- EP-A1- 2 281 916
- WO-A1-2009/037073
- DE-A1- 10 209 667
- DE-A1-102012 100 933
- US-A- 4 704 299
- US-A1- 2008 210 302
- VANGENEUGDEN D ET AL: "AEROSOL-ASSISTED PLASMA DEPOSITION OF BARRIER COATINGS USING ORGANIC-INORGANIC SOL-GEL PRECURSOR SYSTEMS", CHEMICAL VAPOR DEPOSITION, WILEY-VCH VERLAG, WEINHEIM, DE, Bd. 11, 1. Januar 2005 (2005-01-01), Seiten 491-496, XP001501981, ISSN: 0948-1907, DOI: 10.1002/CVDE.200406345

## Beschreibung

Das Verfahren zur Beschichtung eines porösen Materials durch Plasmabehandlung einer kolloidalen Lösung, insbesondere zur Sol-Gel-Synthese, dient insbesondere zur Veränderung von Grenzschichteigenschaften verschiedener Substrate, einschließlich einer Sol-Gel-Lösung.

Beispielsweise gehören Beschichtungsverfahren zum Stand der Technik, bei denen Beschichtungsstoffe aus einer Gasphase oder zerstäubten flüssigen Phase auf einer Oberfläche abgeschieden werden. Dabei sind als physikalische Beschichtungsverfahren sogenannte plasmagestützte Gasphasenabscheidungen bekannt. Insbesondere Normaldruckplasmaverfahren, bei denen die zu beschichtenden Oberflächen nicht in ein Vakuum eingebracht werden müssen, sind von Vorteil, da sich wesentliche Eigenschaften der Beschichtung unter anderem durch den Abstand der Plasmaquelle von der Oberfläche einstellen lassen. Eine Vernetzung von Ölen durch Plasmabehandlung wird beispielsweise zur Versiegelung von porösen bzw. saugfähigen Materialien (u.a. Holz, Beton und Naturfasern) verwendet.

Die plasmagestützte Gasphasenabscheidung im Atmosphärendruck ist sehr zeit-, trägergas- und energieintensiv und für komplexere Formen sehr aufwendig zu realisieren, wobei überhaupt nur sehr wenig Material aus der Gasphase als Schicht abgeschieden werden kann. Außerdem können stärker oberflächenstrukturierte Materialien wie z.B. Holz damit nur sehr ungleichmäßig behandelt werden. Eine plasmabedingte Öelvernetztung ist in der Regel nicht inert gegenüber einer Vielzahl von Reinigungsmitteln.

Einfache Sol-Gel-Verfahren erzeugen durchlässige poröse Schichten bzw. Fasern und sind somit für Schutz- oder Barriereschichten bzw. belastungsfähige Faserstrukturen eher ungeeignet.

Thermische Verfahren (neben Schmelzen auch Verdichten von porösen Sol-Gel-erzeugten Strukturen) verursachen bei unterschiedlichen Ausdehnungskoeffizienten der involvierten Materialien während der Verfestigung durch Abkühlung Spannungen mit der Gefahr der Rissbildung im Substrat, oder zerstören selbiges, wenn es temperaturempfindlich ist.

DE 102009030876 B4 zeigt eine Plasmaabscheidung einer Schicht im Atmosphärendruck. Sie dient hier als Haftvermittler für die nachfolgende Sol-Gel-Beschichtung. Insbesondere ist die gezielte Präparation von aktiven Gruppen bezüglich der Sol-Gel-Schichtkomposition zu erkennen. Schon eine reine Plasmaaktivierung ohne Schichtabscheidung kann hier eine Verbesserung der Benetzbarkeit der zu beschichtenden Oberfläche bewirken. Dies ist allgemein bekannt und erforscht und beeinflusst die Qualität der Haftung der Schicht positiv.

In der Patentveröffentlichung US 2010285319 A1 wird die zu DE 102009030876 B4 erwähnte plasmagestützte Aktivierung als Vorbehandlung erwähnt und gereicht generell auch dort zum beschriebenen Vorteil. Anschließend wird eine Sol-Gel-Schicht traditionell aufgebracht. Die nachfolgende Plasmabehandlung erfolgt, ebenso wie in US 4704299 A, erst nach dem Aushärten und modifiziert die Schichten.

US 20100028561 A1 beschreibt ein Verfahren zum Beschichten eines Substrats mittels einer Atmosphärendruck Plasmaentladung in Gegenwart eines Gases. Es wird ein flüssiges Aerosol als Träger der schichtbildenden Substanzen in die Atmosphärendruck-Plasma-Entladung eingebracht. Es folgt das Härten des Substrates unterstützt durch die Bestrahlung mit ultraviolettem Licht.

In Chemical Vapor Deposition (2005, 11, 491-496, Dirk Vangeneugden at. all) werden polydispersive submikrometer-große Aerosol-Tröfpchen aus flüssigen Präkursoren und Sol-Gel-Systemen in ein Stickstoff-Trägergas-Plasma eingebracht. Dieses ist dielektrisch behindert, zwischen zwei parallelen Plattenelektroden gezündet (DBD), wobei das Substrat, bestehend aus nicht saugfähigem und nicht porösem Materialien (Glas, Siliziumwafer und PET-Folie), auf der unteren Elektrode liegt. Es handelt sich hierbei um eine plasmagestützte Schichtabscheidung aus einem Aerosol im Trägergas heraus auf ein Substrat. Die zerstäubte flüssige kolloidale Lösung (Aerosol) benetzt dabei beim ersten Kontakt mit dem Plasma noch nicht die zu beschichtende Oberfläche. Dieser Aufbau eignet sich nur für dünne Substrate.

EP 1807221 B1 bezieht sich auf ein Verfahren zum Bilden einer polymeren Beschichtung auf einer Substratoberfläche. Eine Mischung, die ein durch freie Radikale initiiertes polymerisierbares Monomer mit einer oder mehreren durch freie Radikale polymerisierbaren Gruppen beinhaltet, wird mit einem weichen lonisationsplasmaverfahren behandelt.

Kolloidale Lösungen in denen Partikel aber auch größere Moleküle unter geringer Wechselwirkung untereinander dispergiert sind nennt man Sole. Hier bleibt eine Präzipitation aus, da die Kolloide sich durch ihre Oberflächenladung gegenseitig abstoßen und damit stabil in der Flüssigkeit verteilt sind. Destabilisiert man diese Lösung z.B. über eine Änderung des pH-Wertes oder Verdampfen des Lösemittels, welches die Partikel in einen kritischen Abstand (bezüglich dem Stern - Potential) zueinander bringt, kommt es zur Bildung eines Gels (dreidimensionales Netzwerk), welches gewöhnlich durch superkritische Trocknung des eingeschlossenen Lösungsmittels in poröse Strukturen überführt wird.

Beispielsweise ist eine dauerhafte, homogene, kompakte und innerte SiOₓ-Beschichtung (quarzkristallhaltige Glasschicht) von porösen Materialien mit Hilfe der weiter oben genannten Verfahren nicht zu erreichen, bzw. nur unter der Verwendung von zusätzlichen Hilfsmitteln, wie das Legen einer Metallplatte (Erhöhung der Permittivität bei der Gasphasenabscheidung mit Plasma) bzw. einer Elektrode direkt unter das relativ dünne Substrat, welche die Prozessführung bzw. das Anwendungsfeld einschränken.

Spezielle Sol-Gel-Verfahren werden beim Spinnen von Fasern angewendet. Bei einer Extrusion, beim Elektrospinnen (Anlegen einer hohen Spannung - mehrere kV - an eine Pipette) oder durch Drawing (ein Verfahren bei dem eine Faser an einer Pipette gezogen wird, die kurz in die Kontaktlinie eines Tropfens mit der Oberfläche, welche er kontaktiert, getaucht wurde und dann mit entsprechender Geschwindigkeit z.B. ca. 10⁻⁴ m/s wegbewegt wird) wird aus einer flüssigen Sol-Gel-Lösung (flüssige Sol-Gel-Vorstufe) eine verfahrensbedingt poröse Faser erzeugt. Die Gelfaser kann einen hohen Anteil organischer Restbestandteile enthalten, der durch Trocknungs- und thermische Pyrolyseschritte entfernt werden muss. Für eine belastbare Faser-Struktur muss gewöhnlich ein anschließendes Sintern bei höheren Temperaturen erfolgen.

Durch die relativ hohe Sintertemperatur im Sol-Gel-Spinnverfahren ist zum Beispiel bei der Herstellung von SiOₓ-Fasern (hier gewöhnlich 800-900 °C, unter Umständen auch bis zu 1200 °C, allgemein in der Regel über 400°C), das Einbetten von weiteren Partikeln bzw. Strukturen, vorzugsweise hoch zugbelastbare Nanotubes, aufgrund der unterschiedlichen thermischen Ausdehnungskoeffizienten mit starken Spannungen in der Faser verbunden.

Eine Funktionalisierung der Faser in Form einer Beschichtung ist aufgrund der hohen Geschwindigkeit im Spinnprozess entsprechend schwierig. Auch die Funktionalisierung mit Plasma im Atmosphärendruck (Hydrophobie, Biokompatibilität, etc.) von bereits fertigen Fasern gestaltet sich schwierig, da man die Strukturen, wie z.B. Vliese, nur sehr ungleichmäßig erreicht. Aus der DE 102 09 667 A1 ist ein Verfahren zur Oberflächenmodifizierung textiler Filtermedien bekannt, bei dem durch eine plasmaunterstützte Sol-Gel-Behandlung unter Verwendung kolloidaler oder polymerer Sole eine Schicht auf die textilen Filtermedien aufgetragen wird, welche zu einer erhöhten Temperatur-, Flammbeständigkeit und Verschleißfestigkeit der textilen Filtermedien führt. Des Weiteren ist aus der WO 2009/037073 A1 ein plasmaunterstützter Sol-Gel-Beschichtungsprozess zur transparenten Beschichtung von einem Substrat mit Plasma bei Atmosphärendruck bekannt, welcher dazu dient optische Reflektionen von Materialien zu verringern.

### Darstellung der Erfindung

Aufgabe der Erfindung ist es, dünnste kompakte bzw. weniger poröse feste Strukturen lokal im niederen Temperaturbereich aus speziellen kolloidalen Lösungen, insbesondere zur Synthese von Materialien in Form von Schichten zu erzeugen.

Gegenstand der Erfindung sind klein skalierte (im nm- bis µm-Bereich) Materialsynthesen direkt aus kolloidalen Dispersionen, insbesondere Sol-Gel-Lösungen erweitert durch eine Plasmabehandlung im nichtthermischen Gleichgewicht auf der Oberfläche der entsprechenden Lösung.

Dabei kann sich die jeweils spezielle kolloidale Flüssigkeit direkt als Benetzung auf einer geeignet vorbehandelten Oberfläche befinden, die dem Wirkungsbereich des Plasmas unterliegt.

Das erfindungsgemäße Verfahren ist in Patentanspruch 1 definiert. Weitere bevorzugte Ausführungsformen der Erfindung sind in den abhängigen Patentansprüchen angegeben. Aspekte der Erfindung werden nachfolgend dargestellt: Gemäß einem Aspekt der Erfindung erfolgt ein Verfahren zur Sol-Gel-Synthese, insbesondere zur Veränderung von Grenzflächeneigenschaften einer kolloidalen Sol-Gel-Lösung auf einem Substrat bzw. in der Form einer Faser durch eine direkte Behandlung mit einem nichtthermischen Plasma nicht unterhalb des Atmosphärendruckbereiches, um eine Destabilisierung und Komprimierung der Kolloidstruktur der Sol-Gel-Lösung zu erzeugen. Das Plasma wirkt direkt auf die kolloidale Sol-Gel-Lösung ein bis eine Modifizierung der Viskosität des Lösungsmittels sowie von Grenzflächenspannungen der Sol-Gel-Lösung und damit eine Beeinflussung der Stabilisierung nahe ihrer Flüssigkeitsgrenzfläche erreicht wird in der Art, dass der Teilchenabstand den kritischen Bereich des Stern-Potentials erreicht, in dem die Abstoßung der Partikel in Anziehung umschlägt und eine Sol-Gel-Synthese stattfindet, indem unmittelbar eine Gelbildung auf der Flüssigkeitgrenzfläche erreicht wird, wodurch die Gelsubstanz hauptsächlich dort entsteht. Eine Weiterbehandlung mit dem nichtthermischen Plasma erfolgt bis zur vollständigen Verdunstung des in der kolloidalen Sol-Gel-Lösung enthaltenen Lösungsmittels aus der entstehenden kompakteren Struktur.

Für den Erfolg des Verfahrens können sämtliche Möglichkeiten der Stoffauswahl, die zum Sol-Gel-Prinzip gehören, einbezogen werden.

Eine Ausgestaltung des Verfahrens beinhaltet, dass mit zunehmender Behandlungsdauer und/oder Behandlungsintensität pro Volumeneinheit die kolloidale Sol-Gel-Lösung durch das Plasma destabilisiert wird und in eine Gelphase und/oder feste Phase überführt wird. Zur Optimierung und/oder Modifizierung der Sol-Gel-Synthese erfolgt in einer Ausführungsform die Einstellung eines speziellen Arbeitsdruckes, nicht unterhalb des Atmosphärendrucks, als ein wichtiger Prozessparameter bei der Plasmabehandlung.

Die kolloidale Sol-Gel-Lösung kann Partikel enthalten. Es können Partikel enthalten sein, welche den Lotuseffekt erzeugen. Oder es können Partikel im Micro- bis Nanobereich eingebracht werden, die im Laufe des Gesamtprozess in die entstehende Oberfläche eingebunden werden. In einer Ausführungsform werden Kristalle, die auf ein elektrisches Wechselfeld reagieren, in der Näher der Oberfläche positioniert. Ebenso können Dipolstrukturen aber auch leitende Strukturen, die verstärkt auf ein elektrisches Wechselfeld reagieren, dem Skineffekt unterliegen und dementsprechend positioniert werden.

Eine Ausführung enthält eine geringe Konzentration von gelierenden Substanzen in der kolloidalen Sol-Gel-Lösung.

In einer weiteren Ausführung wird vor der Behandlung mit dem nichtthermischen Plasma eine poröse bzw. saugfähige Oberfläche mit der kolloidalen Sol-Gel-Lösung benetzt. Die zu beschichtende Oberfläche wird dazu mittels geeigneter, bekannter Verfahren, wie einem Tränken mit Wasserstoffperoxid, Essigsäure, einem geeignetem Haftvermittler, färbenden Stoffen oder mittels geeigneter Plasmaverfahren mittels Plasmajets, vorbehandelt. Bei den letzteren Verfahren ist zusätzlich vorgesehen, dass dem Trägergas Reagenzien, wie Sauerstoff, Wasserstoff und Verbindungen von CₓH_{y} beigemengt werden.

Die Anwendung des Verfahrens kann auf eine poröse Oberfläche durch Aufbringen von einer kolloidalen Sol-Gel-Lösung oder gemäß einem nicht beanspruchten Aspekt auf entstehende Fasern unmittelbar in einem Spinn-Prozess erfolgen. Der Faser-Spinn-Prozess ist entweder ein nasschemisches Verfahren oder ein Ätz-Prozess oder ein Polymerisationsprozess.

Die Modifikation der Sole durch die Nutzung der Effekte einer Plasmabehandlung innerhalb der kompletten Bandbreite von ursprünglichen porösen Sol-Gel-Synthesestrukturen führt nun auch zu kompakten Endprodukten im Wirkbereich der Debyeabschirmung bzw. der Plasmaeffekte (Wellen, Randschicht) ohne höhere thermische Belastung. Es handelt sich um neuartige Stoffsynthesen, die auf die Verwendung eines pH-Wert regulierenden Katalysators, der die kolloidale Lösung über die Veränderung der Oberflächenladungen der Kolloide destabiliesiert, verzichten können.

Ein wesentlicher Vorteil der Erfindung ist es, dass der Behandlungsprozess schneller abgeschlossen ist als eine herkömmliche Lackierung inklusive Trocknung. Außerdem muss wesentlich weniger Material aufgetragen werden, welches sich positiv auf die Kosten auswirkt.

So ist es ebenfalls ein Vorteil der Beschichtung unter Verwendung der plasmagestützten Sol-Gel-Synthese, dass das natürliche Aussehen der Materialien durch eine geringe Schichtdicke nicht beeinträchtigt und das Material dennoch versiegelt wird.

Ein anderer Vorteil eines nicht beanspruchten Aspekts der Erfindung ist es, dass das Problem der anschließenden Funktionalisierung mit Plasma von bereits fertigen Fasern durch das erfindungsgemäße Verfahren behoben wird, indem schon während des eigentlichen Spinn-Prozesses eine unmittelbare Plasmabehandlung stattfindet.

Durch den Skineffekt, der durch die Plasmafrequenz in der Faser hervorgerufen wird, können Strukturen, wie z.B. Kristalle, die auf ein elektrisches Wechselfeld reagieren, unmittelbar an der Oberfläche der Faser positioniert werden.

### Ausführung der Erfindung

Die Erfindung wird anhand von Ausführungsbeispielen erläutert.

Mit der erfindungsgemäßen Lösung werden weniger poröse bis kompakte, undurchlässige bzw. belastbare Strukturen lokal erzeugt, die bei der Behandlung unterhalb der Schmelztemperatur der jeweiligen Materialien bleiben.

### Beschichtung von Oberflächen

Die kolloidale Lösung, insbesondere eine kolloidale Dispersion, beispielsweise eine Sol-Gel-Lösung, wird auf eine Oberfläche, beispielsweise auf Holz, gebracht und mit einem nichtthermischen Plasma eines Edelgases behandelt. Durch das Plasma wird direkt in den Sol-Gel-Prozess eingegriffen, indem die Grenzflächenspannungen der Sol-Gel-Lösung im Plasmaeinfluss modifiziert werden. Die plasmabedingte Erhöhung der Benetzbarkeit fördert anfangs ein gleichmäßiges tiefes Durchtränken der Holzstruktur mit einer entsprechenden Sole. Dabei wird mit dem statistischen Effekt der Debyeabschirmung aber auch durch Wellen in entsprechender Plasmafrequenz, der Ausprägung einer Randschicht mit entsprechender Elektronendichte sowie dem Energieeintrag die erwähnte Stabilisierung auf der Flüssigkeitsoberfläche beeinflusst, wodurch der Kolloidabstand den kritischen Bereich des Stern-Potentials erreicht, in dem die Abstoßung der Partikel in Anziehung umschlägt. Es kommt unmittelbar zur Gelbildung, wodurch sich die entstandene Gelsubstanz hauptsächlich auf der Oberfläche ansiedelt, da eine Diffusion bzw. ein Fluss als Gel (höhere Viskosität) ins Innere behindert wird. Es bilden sich kompakte Gel-Strukturen, während sich die Oberflächenspannung (bzw. Viskosität) des Lösungsmittels verringert. Durch das Plasma wird somit unmittelbar in den Sol-Gel-Prozess in der Phase von flüssig zu fest bzw. zu Gel eingegriffen. Dadurch nimmt die Beweglichkeit der gelierenden Partikel durch die resultierende Erhöhung der Fluidität ihrer umgebenden Lösung zu. Letztere wird schließlich verdampft. So werden Poren im Holz verschlossen. Gleichzeitig benetzt das Lösungsmittel (hier bevorzugt Ethanol) aufgrund seiner höheren Fluidität überwiegend das Holz und lässt die Gelpartikel in alle Bereiche dieser Oberfläche "gleiten". Unter Verwendung einer SiOₓ-haltigen Sol-Gel-Lösung und nach vollständiger Verdunstung des Lösungsmittels ist das Holz nachweislich mit einer sehr dünnen (ca. 50 bis mehrere hundert nm variierbar) glasartigen Schicht versiegelt. Zurück bleibt eine kompakte Schicht, welche den im zerstörungsfreien Bereich liegenden Biegebeanspruchungen des Holzes wiedersteht.

Die Plasmabehandlung überführt eine spezielle Sol-Gel-Lösung in die GelPhase. Diese wird mit herkömmlichen Verfahren durch eine Stabilisierung über Oberflächenladungen verhindert und traditionell durch eine Beeinflussung in der Einstellung des pH-Wertes mittels Katalysatoren oder ein Verdampfen des Lösungsmittels eingeleitet.

Mit zunehmender Behandlungsdauer bzw. Behandlungsintensität pro Volumeneinheit kann die Lösung in eine feste Phase überführt werden, wobei lokal auch in sich geschlossene Strukturen (kompakt) gegenüber den aus dem reinen Sol-Gel-Verfahren und superkritischer Trocknung erzeugten hochporösen Strukturen möglich sind.

Die Plasmabehandlung der kolloidalen Lösung kann auch unter Variation des Druckes (nicht unterhalb des Atmosphärendrucks) erfolgen. Die Einstellung eines speziellen Arbeitsdruckes ist ein wichtiger zusätzlicher Prozessparameter und kann eine spezielle Synthese optimieren und modifizieren.

Mit der kolloidalen Lösung können für den Lotuseffekt geeignet große Partikel zur Erzeugung eines speziellen Oberflächenprofils aufgetragen werden und selbigen hervorrufen.

Eine Prozessführung für homogene Schichten kann gegebenenfalls mit einer sehr geringen Konzentration von gelierenden Substanzen in der Lösung und einer exakten Aussteuerung des Gasflusses, der die Flüssigkeit homogen über die Oberfläche bläst, erfolgen.

Die zu beschichtende Oberfläche kann mittels geeigneter, bekannter Verfahren vorbehandelt werden. Beispielsweise sind eine Plasmabehandlung oder das Tränken des Substrates mit einer geeigneten Lösung, die im Prozess die Rolle des Haftvermittlers spielt und ebenso mit Plasma oder anderen Verfahren behandelt werden kann, vorstellbar. Dabei können auch hier schon Partikel aufgebracht werden, die im Laufe des Gesamtprozess in die entstehende Oberfläche chemisch und strukturell eingebunden werden.

In einem weiteren Ausführungsbeispiel wird der gleiche Prozess auf Papier durchgeführt. Hier zeigt sich darüber hinaus, dass sich das Papier anschließend sogar biegen lässt ohne seine Eigenschaft der Wasserundurchlässigkeit zu verlieren (Glas verliert in dünnsten Schichten seine Sprödigkeit und ist einer der elastischsten Werkstoffe die es gibt), erst beim Knicken wird die glasartige Schicht zerstört.

Die Anwendung kann neben der direkten Versiegelung von Oberflächen beispielsweise von Holz, Textilien, Leder, Naturfasern, Beton, Papier oder anderen porösen Materialien auch überall dort erfolgen, wo beispielsweise relativ homogene Schichtdicken verlangt werden.
Oder es soll eine zuverlässige Basisschicht für eine Funktionalisierung mit bereits etablierten Verfahren bezüglich Glasoberflächen (z.B. Hydrophobie) erfolgen.

Das Verfahren kann darüber hinaus benutzt werden, eine entsprechende kolloidale Lösung ohne pH-Wert-Regulierung durch verunreinigende Katalysatoren in die Gelphase bzw. Phase erhöhter Viskosität zu überführen (Destabilisierung). Auf die Art können hochreine Stoffsynthesen durchgeführt werden.

Dem Arbeitsgas können dabei auch zusätzlich abzuscheidende bzw. einzubindende bzw. reaktive Substanzen (HMDSO, Ethan, Methan, O₂, H₂ etc.) in der Dampfphase beigefügt werden, wie es in der Dampfphasenabscheidung (atmospheric pressure plasma enhanced chemical vapor deposition - AP-PECVD) allgemein üblich ist. Weiterführend in der Erfindung ist hier das Einwirken des Plasmas auf die vorerst flüssige kolloidale Lösung während des Phasenübergangs flüssiggelartig bzw. flüssig-fest.

Für die Erzeugung des kalten Plasmas im nicht thermischen Gleichgewicht kommen alle gängigen Verfahren in Betracht, deren Apparatur vollständig über dem Substrat liegt, insbesondere die dielektrisch behinderte Barriereentladung in ihren verschiedenen Arten aber auch die entsprechenden Verfahren für die Erzeugung von Microplasmen. Je nach kolloidaler Lösung sind unterschiedliche Eigenschaften des Plasmas (vor allem Temperatur, Elektronendichte und chemisch aktive Stoffe (O₂, H₂, CₓH_{y}, CO₂, etc.) gefordert, die sich z.B. an der superkritischen Phase des Lösemittels, der Struktur und Kolloidgröße orientieren.

### Plasmagestütztes Sol-Gel-Spinnen von Fasern

Das Wesen des nicht beanspruchten zweiten Ausführungsbeispiels besteht darin, dass während des eigentlichen Spinn-Prozesses eine unmittelbare Plasmabehandlung stattfindet. Eine aus der Sol-Gel-Lösung gezogene Faser befindet sich je nach Spinnverfahren (ca. 40 - mehrere hundert nm dünn) in dem Wirkbereich des Plasmas.

Hierzu wird das nasschemische Verfahren mit der plasmagestützten Polymerisation kombiniert. Aber auch die Kombination einer Plasmabehandlung in Kombination mit Ätz-Prozessen (verstärkt durch die Beimengung von O₂ ins Trägergas) und mit der lokalen Beeinflussung des pH-Wertes an der Oberfläche der bewegten Spinnflüssigkeit wird eine gezielte Oberflächenmodifikation bewirkt.

Durch die Plasmabehandlung, wird die kolloidale Lösung unmittelbar beim Spinnen destabilisiert, das Lösemittel wird schneller verdampft und noch durch weitere Effekte in eine kompakte Struktur überführt. Durch den Skineffekt, der durch die Plasmafrequenz in der Faser hervorgerufen wird, werden Strukturen, wie z.B. Kristalle, die auf ein elektrisches Wechselfeld reagieren, unmittelbar an der Oberfläche der Faser positioniert.

Das Problem des Schrumpfens der Sol-Gel-Matrix beim Trocknen bei der konventionellen Sol-Gel-Faserherstellung entsteht beim erfindungsgemäßen Verfahren weniger, da durch das Verfahren das Gel-Netzwerk unmittelbar im Plasmaübergang (flüssig - fest bzw. Gel) komprimiert wird, was die Qualität hinsichtlich Riss- und Bruchbildung verbessert.

Durch eine relativ hohe Sintertemperatur im Sol-Gel-Spinnverfahren des Standes der Technik ist zum Beispiel bei der Herstellung von SiOₓ Fasern (unter Umständen bis zu ca. 1200 °C) das Einbetten von weiteren Partikeln bzw. Strukturen, vorzugsweise von hoch zugbelastbaren Nanotubes, aufgrund der unterschiedlichen thermischen Ausdehnungskoeffizienten mit starken Spannungen in der Faser verbunden. Durch die erfindungsgemäße Lösung wird eine relativ spannungsfreie Einbettung von weiteren Strukturen in eine kompakte (nicht poröse) Faser bzw. in eine weniger poröse Faser (in Abhängigkeit zur Behandlungsintensität mit dem Plasma und der Strukturgröße) ermöglicht. Darüber hinaus verändert das Plasma das Strömungsprofil eines Körpers dahingehend, dass Verwirbelungen entgegengewirkt wird. Der zu spinnende Faden wird stabilisiert, was sich sehr förderlich auf den Spinnprozess insbesondere bei hohen Geschwindigkeiten, wie sie beim Elektrospinnen aber auch durch das Spinnen durch eine Düse (Extrusion) auftreten, auswirkt.

### Plasmabehandlung bei festen Sol-Gel-Vorstufen

Bei den festen Sol-Gel-Vorstufen spielt die Plasmabehandlung bei der Destabilisierung und beim Verdampfen von Restlösungsmittel und der chemischen Aktivierung eine Rolle. Hier wird durch ein spezielles Verfahren die Sol-Gel-Lösung in eine feste Phase gebracht, jedoch ohne eine Ausbildung von kovalenten Bindungen, welche für die Gelierung typisch wäre.

Dies geschieht in der Regel durch spezielle Temperaturerhöhung bei gleichzeitigem Anlegen eines speziellen Unterdruckes (Vakuum). Wird die dadurch entstandene zähflüssige Masse wieder abgekühlt, entsteht eine feste Sol-Gel-Vorstufe, die wieder aufgeschmolzen extrudiert bzw. versponnen werden kann.

Liegt in dieser Schmelze noch eine für das Sol-Gel-Verfahren typische Stabilisierung der Partikel im vorhandenen Restlösemittel vor, so findet das Verfahren der Plasmabehandlung zur Komprimierung der Struktur bzw. Einleitung der Gelphase hier ebenso seine Anwendung.

### Plasmagestütztes Elektrospraying

Elektrospraying ist im Prinzip das gleiche Verfahren wie das E-Spinning, nur das es zu keiner Fadenbildung, sondern lediglich zu einer Zerstäubung der Flüssigkeit kommt. Durch Elektrospraying wird eine Flüssigkeit durch das Anlegen eines elektrischen Feldes in Abhängigkeit zur Oberflächenspannung und zur Leitfähigkeit der Flüssigkeit zerstäubt. Dabei können auch spezielle Sol-Gel-Lösungen verwandt werden.

## Patentansprüche

1. Verfahren zur Beschichtung eines porösen Materials, das aus der Gruppe poröser Materialien beinhaltend Holz, Textilien, Leder, Naturfasern, Beton oder Papier ausgewählt ist, durch Plasmabehandlung einer kolloidalen Sol-Gel-Lösung mit einem nichtthermischen Plasma, wobei
- die kolloidale Sol-Gel-Lösung auf eine poröse Oberfläche des porösen Materials aufgebracht wird; und
- das Plasma direkt auf diese kolloidale Sol-Gel-Lösung einwirkt bis eine Modifizierung der Viskosität des Lösungsmittels sowie von Grenzflächenspannungen der Sol-Gel-Lösung und damit eine Beeinflussung der Stabilisierung auf ihrer Flüssigkeitsgrenzfläche erreicht wird in der Art, dass eine Sol-Gel-Synthese stattfindet, indem unmittelbar eine Gelbildung auf der Flüssigkeitsgrenzfläche erreicht wird, wodurch die Gelsubstanz hauptsächlich dort entsteht und Weiterbehandlung mit dem nichtthermischen Plasma bis zur vollständigen Verdunstung des in der kolloidalen Sol-Gel-Lösung enthaltenen Lösungsmittels.

2. Verfahren nach Anspruch 1 **dadurch gekennzeichnet, dass** zur Optimierung der Sol-Gel-Synthese die Einstellung eines speziellen Arbeitsdruckes als ein Prozessparameter bei der Plasmabehandlung erfolgt.

3. Verfahren nach Anspruch 1 oder 2 **dadurch gekennzeichnet, dass** die kolloidale Sol-Gel-Lösung Partikel enthält.

4. Verfahren nach Anspruch 3 **dadurch gekennzeichnet, dass** unter diesen Partikel geeignet große Partikel zur Erzeugung eines speziellen Oberflächenprofils enthalten sind, welche den Lotuseffekt erzeugen

5. Verfahren nach Anspruch 1 **dadurch gekennzeichnet, dass** vor der Behandlung mit dem nichtthermischen Plasma, die poröse Oberfläche mit der kolloidalen Sol-Gel-Lösung benetzt wird.

6. Verfahren nach Anspruch 1 **dadurch gekennzeichnet, dass** eine Plasmabehandlung als Vorbehandlung der zu beschichtenden porösen Oberfläche erfolgt.

7. Verfahren nach Anspruch 5 **dadurch gekennzeichnet, dass** die zu beschichtende poröse Oberfläche mittels Tränken mit Wasserstoffperoxid, Essigsäure, oder färbenden Stoffen vorbehandelt wird, bevor die Behandlung mit dem nichtthermischen Plasma erfolgt.

## Claims

1. A method for coating a porous material selected from the group of porous materials including wood, textiles, leather, natural fibers, concrete or paper by plasma treatment of a colloidal sol-gel solution with a non-thermal plasma, wherein
- the colloidal sol-gel solution is applied to a porous surface of the porous material; and
- the plasma acts directly on this colloidal sol-gel solution until a modification of the viscosity of the solvent and of the interfacial tensions of the sol-gel solution and thus an influence on the stabilization on its liquid interface is achieved in such a way that a sol-gel synthesis takes place by directly achieving a gel formation on the liquid interface, whereby the gel substance is mainly formed there and further treatment with the non-thermal plasma until complete evaporation of the solvent contained in the colloidal sol-gel solution.

2. Process according to claim 1 **characterized in that**, in order to optimize the sol-gel synthesis, a special working pressure is set as a process parameter in the plasma treatment.

3. Process according to claim 1 or 2 **characterized in that** the colloidal sol-gel solution contains particles.

4. Method according to claim 3 **characterized in that** among these particles suitably large particles are contained for generating a special surface profile, which generate the lotus effect.

5. Process according to claim 1 **characterized in that** before treatment with the non-thermal plasma, the porous surface is wetted with the colloidal sol-gel solution.

6. Process according to claim 1, **characterized in that** a plasma treatment is carried out as pretreatment of the porous surface to be coated.

7. Process according to claim 5 **characterized in that** the porous surface to be coated is pre-treated by soaking with hydrogen peroxide, acetic acid, or coloring substances before treatment with the non-thermal plasma.

## Revendications

1. Procédé de revêtement d'un matériau poreux qui est choisi dans le groupe des matériaux poreux comprenant le bois, les textiles, le cuir, les fibres naturelles, le béton ou le papier, par traitement plasma d'une solution colloïdale de sol - gel avec un plasma non thermique, dans lequel
- la solution colloïdale de sol - gel est déposée sur une surface poreuse d'un matériau poreux ; et
- le plasma agit directement sur cette solution colloïdale de sol - gel jusqu'à ce qu'une modification de la viscosité du solvant et des tensions interfaciales de la solution de sol - gel et donc une influence de la stabilisation sur leur interface liquide soient obtenues de manière qu'une synthèse de sol - gel ait lieu en obtenant directement une formation de gel à l'interface liquide, ce qui permet que la substance de gel soit principalement produite à cet endroit et le traitement avec le plasma non thermique est poursuivi jusqu'à l'évaporation complète du solvant contenu dans la solution colloïdale de sol - gel.

2. Procédé selon la revendication 1, **caractérisé en ce que** l'ajustement d'une pression de travail spécifique s'effectue en tant que paramètre de procédé lors du traitement plasma pour l'optimisation de la synthèse de sol - gel.

3. Procédé selon la revendication 1 ou 2 **caractérisé en ce que** la solution colloïdale de sol - gel comprend des particules.

4. Procédé selon la revendication 3, **caractérisé en ce que** des particules de taille adaptée qui produisent l'effet lotus sont contenues parmi ces particules pour générer un profil de surface spécifique.

5. Procédé selon la revendication 1, **caractérisé en ce que** la surface poreuse est humidifiée par la solution colloïdale de sol - gel avant le traitement avec le plasma non thermique.

6. Procédé selon la revendication 1, **caractérisé en ce qu'**un traitement plasma a lieu comme prétraitement de la surface poreuse à revêtir.

7. Procédé selon la revendication 5, **caractérisé en ce que** la surface poreuse à revêtir est pré-traitée par imprégnation avec du peroxyde d'hydrogène, de l'acide acétique, ou des substances colorantes, avant que le traitement avec le plasma non thermique ne s'effectue.
